Europäisches Patentamt

European Patent Office

Office européen des brevets

(19)

(11) Numéro de publication: **0 148 043**

**B1**

(12) **FASCICULE DE BREVET EUROPEEN**

(45) Date de publication du fascicule du brevet: **18.05.88**

(51) Int. Cl.⁴: **C 03 B 23/025**

(21) Numéro de dépôt: **84402260.8**

(22) Date de dépôt: **09.11.84**

(54) Dispositif pour le bombage de plaques de verre.

(30) Priorité: **09.11.83 FR 8317830**

(43) Date de publication de la demande:
**10.07.85 Bulletin 85/28**

(45) Mention de la délivrance du brevet:
**18.05.88 Bulletin 88/20**

(84) Etats contractants désignés:
**BE DE FR GB IT LU NL SE**

(56) Documents cités:
**FR-A-2 342 947**

(73) Titulaire: **SAINT-GOBAIN VITRAGE**
**Les Miroirs 18, avenue d'Alsace**
**F-92400 Courbevoie (FR)**
(84) **BE FR GB IT LU NL SE**

(73) Titulaire: **VEGLA Vereinigte Glaswerke GmbH**
**Viktoriaallee 3-5**
**D-5100 Aachen (DE)**
(84) **DE**

(72) Inventeur: **Halberschmidt, Friedrich**
**Christian Derichstrasse 16**
**D-5120 Herzogenrath (DE)**
Inventeur: **Audi, Josef**
**Kronenberg 61**
**D-5100 Aachen (DE)**
Inventeur: **Schubert, Gerhard**
**Gertrudisstrasse 9**
**D-5120 Herzogenrath (DE)**

(74) Mandataire: **Leconte, Jean-Gérard et al**
**Saint-Gobain Recherche 39, Quai Lucien Lefranc**
**F-93304 Aubervilliers Cedex (FR)**

Courier Press, Leamington Spa, England.

## Description

La présente invention concerne le bombage, sous l'effet de leur propre poids, de plaques de verre défilant en position horizontale ou sensiblement horizontale, à l'aide d'un dispositif comportant un lit de conformation fait d'éléments de conformation tournants qui présentent dans une partie amont, au contact des plaques de verre, ou fur et à mesure qu'elles avancent, des génératrices dont l'enveloppe de plus en plus courbée, ces éléments de conformation de cette partie amont étant montés sur un chassis réglable en hauteur et inclinable dans la direction longitudinale du déplacement des plaques, par pivotement autour d'un axe horizontal transversal situé à son extrémité amont.

Les éléments de conformation tournants de ces dispositifs peuvent être de configurations diverses.

Ainsi, il peut s'agir par exemple de rouleaux rigides à profil courbe, montés tournants, comme représenté dans le document de brevet US—A—4 139 359.

Il peut s'agir aussi de tiges ou de rouleaux cylindriques tournants suffisamment flexibles et élastiques pour être déformés par inclinaison de leurs extrémités par rapport à l'horizontale et pour que cette modification de forme soit compatible et se conserve avec la rotation. De tels rouleaux déformables sont décrits par exemple dans le document de brevet US—A—4 226 608.

Dans un autre dispositif de bombage connu, les éléments de conformation tournants participent également au transport et sont formés de gaines tubulaires flexibles entraînées en rotation sur elles-mêmes et autour de tiges cintrées rigides. Le réglage du rayon de courbure de la forme de bombage, ainsi que la progression de sa courbure dans le sens de transport des plaques de verre est réalisé par le fait que les différentes tiges cintrées sont montées de manière à pouvoir être inclinées en pivotant autour d'un axe qui passe par leurs extrémités et peuvent être réglées à des inclinaisons différentes les unes des autres, ce qui les écarte de plus en plus du plan de transport dans lequel se situent les plaques de verre quand elles arrivent.

Un tel dispositif de bombage est décrit en détail dans le document de brevet FR—A—2 312 463. Dans ce dispositif antérieur, sur lequel se base le préambule de la revendication 1, les éléments de conformation d'une partie amont, c'est à dire les tiges cintrées entourées de leurs gaines tubulaires tournantes situées dans une partie en tête du dispositif, sont montés sur un chassis articulé à son extrémité amont sur un axe de pivotement transversal fixe situé au niveau des rouleaux transporteurs cylindriques de l'installation précédente qui amène les plaques de verre au dispositif. Tandis que chaque tige cintrée de cette partie amont peut être plus ou moins inclinée pour faire varier le rayon de courbure que chaque élément de conformation qui la contient présente sous les plaques de verre, le chassis qui supporte l'ensemble des éléments de conformation peut pivoter autour de l'axe transversal situé à son extrémité amont de façon que les sommets des courbures des éléments de conformation restent toujours au niveau auquel les plaques de verre encore planes sont introduites dans le dispositif de bombage.

A cette partie amont du dispositif de bombage fait souvent suite une partie aval dans laquelle toutes les tiges cintrées ont la même inclinaison maximale identique à celle de la dernière tige de la fin de la partie amont.

Ainsi grâce à ce dispositif connu, il est possible aussi bien pour des lits de conformation convexes que concaves, de maintenir la ligne centrale au sommet des volumes de verre, au même niveau pendant l'opération de bombage.

Toutefois, lorsque pour remplir certaines conditions, on veut réaliser le bombage d'une manière telle que les bords longitudinaux des volumes de verre s'étendant parallèlement à la direction du transport, restent au même niveau, cela n'est possible, avec le dispositif connu, que pour une largeur déterminée des plaques de verre. Lorsque des plaques de verre d'une autre largeur doivent être bombées, la position de leurs bords longitudinaux sur les éléments de conformation est forcément différente et le niveau de ces bords est forcément plus bas ou plus haut, ce qui agit sur la qualité optique des plaques de verre cintrées et peut l'influencer défavorablement.

L'invention a pour but de développer des dispositifs de bombage du type spécifié, qui permettent de satisfaire les exigences les plus variées relativement au niveau de zones déterminées des plaques de verre traitées.

En particulier, le dispositif de bombage doit être d'une souplesse telle qu'il offre la possibilité, aussi bien dans le cas de lits de conformation convexes que dans le cas de lits concaves, indépendamment de la grandeur des plaques de verre à bomber, de maintenir soit la ligne centrale au sommet de la courbure, soit les bords longitudinaux des plaques de verre, au niveau de transport initial des plaques planes de verre, pendant la bombage et éventuellement la trempe et/ou le refroidissement qui suivent.

Ce but est réalisé conformément à l'invention par le fait que l'axe de pivotement du chassis pivotant portant les éléments de conformation de la partie amont du dispositif de bombage est monté réglable en hauteur.

Grâce à ce réglage en hauteur de l'axe de pivotement du chassis portant les éléments de conformation, l'adaptation du dispositif de bombage à une exigence particulière s'opère déjà dès le premier élément de conformation rencontré par les plaques de verre, de sorte que l'on évite ainsi les faibles influences défavorables des dispositifs antérieurs dans lesquels éventuellement seuls les éléments de conformation disposés plus en aval étaient réglables en hauteur.

Ainsi lors du bombage de plaques de verre de largeurs différentes, les réglages du dispositif de bombage conforme à l'invention peuvent être modifiés pour que, en particulier dans le cas de lit de conformation concave, les bords longitudinaux des plaques de verre, parallèles à la direction de transport restent constamment exactement au même niveau, à la fois dans le four de réchauffage qui précède le dispositif de bombage, dans le dispositif de bombage lui-même, et dans les installations de trempe et/ou de refroidissement qui suivent.

L'invention sera maintenant décrite plus en détail en référence aux figures qui représentent:

figure 1: une vue d'ensemble en perspective d'un dispositif de bombage conforme à l'invention,

figure 2: une vue en coupe longitudinale d'une autre forme de réalisation d'un dispositif de bombage, conformé à l'invention, précédé d'un four de rechauffage et suivi d'un poste de trempe,

figure 3: une vue en coupe longitudinale d'une autre forme de réalisation d'un dispositif de bombage intégré dans une installation de fabrication de plaques de verre bombées.

figure 4: une vue en coupe verticale suivant la ligne IV—IV de la figure 3,

figure 5 et figure 6: des schémas d'illustration du fonctionnement du réglage en hauteur de l'axe de pivotement du chassis portant le lit de conformation.

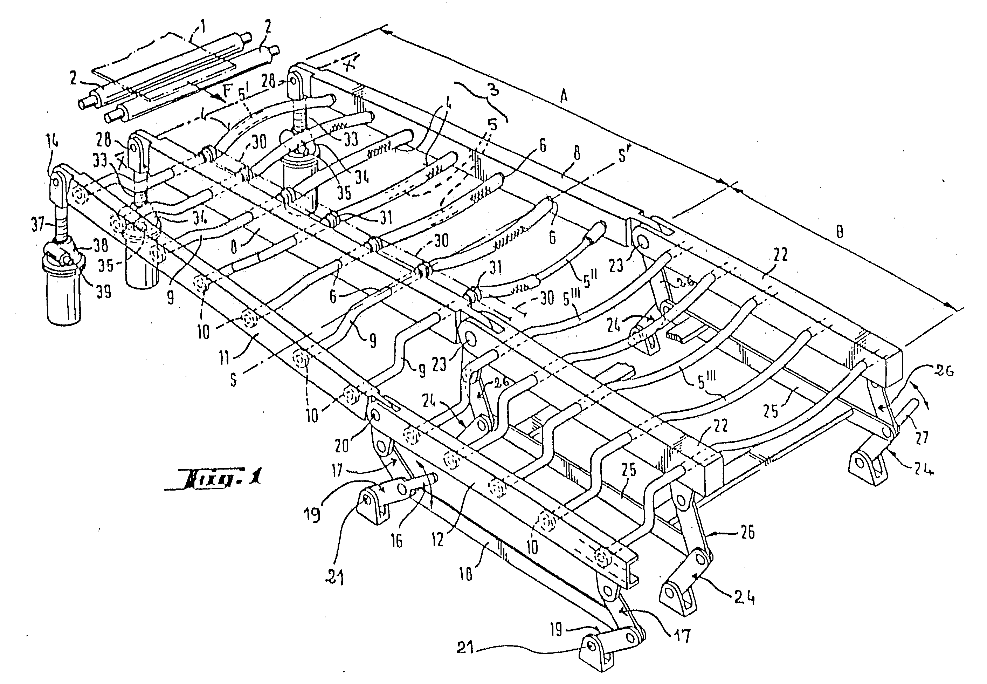

La figure 1 illustre la structure fondamentale d'un dispositif de bombage conforme à l'invention. Des plaques de verre 1 à bomber sont chauffées à la température de bombage dans un four de réchauffage non montré ici, dans laquel elles sont transportées dans le sens de la flèche F grâe à des rouleaux transporteurs 2 entraînés en rotation. Le four de rechauffage est suivi du poste de bombage. Ce poste de bombage comporte un lit de conformation enfermé dans une enceinte chauffée non représentée, et constitué d'une pluralité d'éléments de conformation 3 tournants sur lesquels les plaques de verre 1 reposent. Sous l'effet de leur propre poids, les plaques de verre 1 épousent la forme du lit de conformation.

Chaque élément de conformation tournant 3 comprend une gaine tubulaire 4 flexible, résistante à la torsion, entraînée en rotation sur elle-même autour d'une tige cintrée rigide 5.

Toutes les tiges cintrées ont la même forme et le même rayon de courbure, chacune est cintrée dans sa partie médiane tandis que ses extrémités 6 sont redressées par rapport à cette partie médiane de telle sorte qu'elles sont disposées dans le prolongement l'une de l'autre et forment un axe de pivotement S—S' autour duquel la tige cintrée peut s'incliner. Ces extrémités 6 des tiges cintrées sont montées pivotantes dans des longerons 8 parallèles à la direction de transport des plaques de verre 1, ces longerons constituant un chassis support pour le lit de conformation. Du côté de l'extérieur du chassis déterminé par les longerons 8, chaque tige cintrée 5 est pourvue d'une manivelle 9 qui sert à l'incliner dans la position angulaire souhaitée. A cet effet, un galet 10 est monté sur l'extrémité de chaque manivelle 9 et tous les galets 10 associés à toutes les tiges cintrées 5 du lit de conformation sont guidés dans un rail en U référencé 11 dans une première partie A du lit de conformation, référencé 12 dans une deuxième partie B qui fait suite à la première.

Dans la première partie A du lit de conformation, les tiges cintrées 5 sont toutes inclinées différemment, l'inclinaison augmentant progressivement d'une tige à l'autre, constituant ainsi un lit de conformation dont la courbure dans la direction transversale perpendiculaire à la direction d'avancement des plaques de verre 1, va en augmentant. Dans notre exemple de réalisation le lit de conformation est concave.

Alors que la première des tiges cintrées 5 du lit de bombage, tige référencée 5', est très peu inclinée, presque pratiquement couchée et contenue dans le plan de transport, c'est à dire le plan défini par les génératrices supérieures des rouleaux 2 du four de réchauffage, les tiges 5 suivantes sont de plus en plus inclinées, au fur et à mesure que l'on progresse sur le lit de conformation, jusqu'à la dernière des tiges 5 de cette portion A, dernière tige référencée 5'', qui possède l'inclinaison maximale déterminant la courbure souhaitée pour les plaques de verre 1.

Pour assurer l'augmentation progressive de l'inclinaison des différentes tiges cintrées 5, le rail 11 est monté pivotant autour d'une articulation transversale 14 située à son extrémité amont, ce qui permet de l'incliner dans le sens de la progression des plaques de verre, par rapport au chassis déterminé par les longerons 8, en particulier par rapport à l'horizontale si ce chassis est disposé horizontalement. Un levier 16 appartenant à un mécanisme d'articulation à genouillère 17, 18, 19 décrit en détail plus loin, sert à assurer le pivotement du rail 11 autour de l'articulation 14.

Le rail 12 dans lequel roulent les galets 10 d'extrémité des manivelles 9 de tiges cintrées 5 dans la partie B de l'installation s'articule sur un axe 20 appartenant à l'extrémité aval du rail 11. Il est mobile en hauteur tout en restant parallèle à lui-même, notamment en restant horizontal, par action sur le levier 16 lequel commande la déformation de deux parallélogrammes contigus, le premier formé par une bielle 18, deux biellettes 17 attachées chacune à deux points distants du rail 12, cette portion de raile 12 constituant le quatrième coté du parallélogramme, le second formé par la bielle 18 commune aux deux parallélogrammes, deux bras 19 dont l'un est prolongé par le levier 16, le quatrième coté étant constitué par une portion de bâti non référencée située entre deux points fixes 21 d'attache des deux bras 19.

En raison du déplacement forcément parallèle à lui-même du rail 12, l'inclinaison de toutes les tiges cintrées montées dans la partie B de l'installation de montage et référencées 5''' du fait de leur appartenance à cette partie B, se modifie de la même valeur, de sorte que toutes ces tiges cintrées 5''' ont la même inclinaison, inclinaison identique par ailleurs à celle de la tige cintrée 5'', dernière des tiges cintrées 5 de la partie A du lit de conformation.

La variation de hauteur du rail 12, entraîne du fait de la liaison entre ledit rail 12 et le rail 11, l'inclinaison du rail 11 par pivotement autour de l'articulation 14.

En lieu de place du mécanisme d'articulation à génouillère 17, 18, 19, on pourrait bien entendu utiliser d'autres moyens permettant un réglage en hauteur progressif du rail 12 et une inclinaison progressive du rail 11.

Les tiges cintrées 5''' de la partie B du lit de conformation sont montées pivotantes dans un chassis 22 qui s'articule autour des articulations 23 sur l'extrémité aval des longerons 8 du chassis de la partie A du lit de conformation. Ce chassis 22 est monté sur un mécanisme d'articulation à genouillères 24, 25, 26, du même type que celui qui porte le rail 12. Ce mécanisme 24, 25, 26, peut être actionné par un levier 27, ce qui déplace le chassis 22 parallèlement à lui-même, dans le sens de la hauteur et ce que modifie également l'inclinaison du chassis formé des longerons 8 de la première partie A du lit de conformation en le faisant pivoter autour des articulations 28, situées sur un axe horizontal transversal XX' en tête de l'installation.

Ainsi grâce à ces réglages on peut simplement modifier le rayon de courbure du lit de conformation.

Le levier 16 et le mécanisme à genouillères 17, 18, 19 permet non seulement de régler le rayon de courbure du lit de conformation, mais aussi d'orienter la courbure, c'est à dire rendre le lit concave ou convexe.

Le levier 27 quant à lui, sert à régler la hauteur de la portion B du lit de conformation, et en conséquence l'inclinaison de la portion A dudit lit, de façon que pour des largeurs déterminées des plaques de verre 1, soit la ligne disposée longitudinalement au centre desdites plaques 1, soit les bords longitudinaux restent à un niveau constant.

Les paliers 28 des longerons 8 qui constituent le chassis porteur des tiges cintrées 5 dans la portion A du lit de conformation sont réglables en hauteur. Pour ce faire, ils sont supportés par des tiges 33 de vérins de levage 34, tiges 33 mobiles par action sur l'arbre d'entraînement 35.

D'une manière analogue, l'articulation 14 du rail 11 en U est montée sur une tige 37 d'un vérin de levage 38, laquelle tige peut monter ou descendre par action sur l'arbre d'entraînement 39.

Les gaines tubulaires flexibles 4 résistantes à la torsion, qui recouvrent les tiges cintrées 5 sont entraînées en rotation sur elles-mêmes autour de ces tiges grâce à des pignons dentés 31 dont elles sont solidaires et qui engrènent sur une ou plusieurs chaines 30.

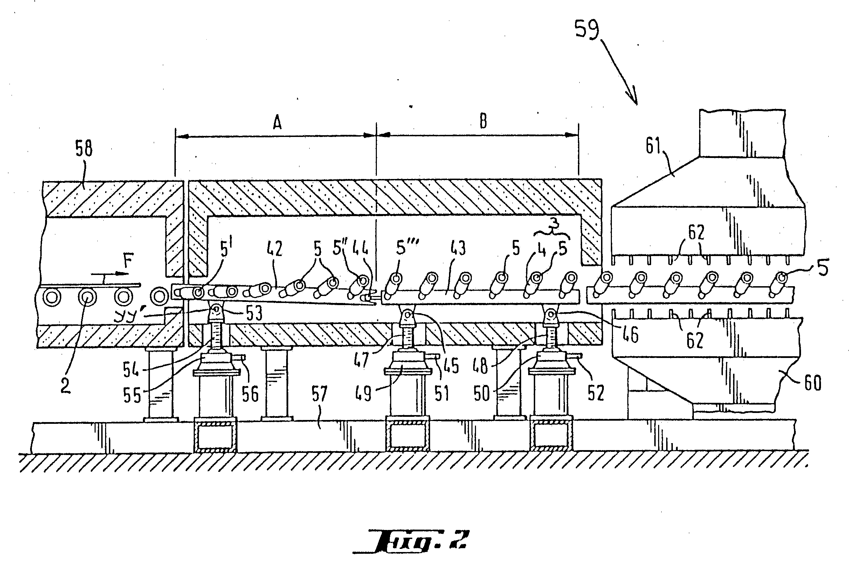

La figure 2 montre en coupe longitudinale suivant l'axe médian l'ensemble d'une installation de fabrication de plaques de verre bombées, comprenant un dispositif de bombage conforme à l'invention. Ce dispositif de bombage est précédé par un four de réchauffage 58 équipé de rouleaux 2 de transport des plaques de verre dans le sens de la flèche F, et suivi par un poste de trempe 59. On retrouve des éléments du poste de bombage montrés figure 1, à savoir principalement les éléments de conformation 3 formés des tiges cintrées 5 entourées de leurs gaines tubulaires flexibles 4 entraînées en rotation. Ces éléments de conformation 3 déterminent un lit de conformation en deux parties: une première partie A dans laquelle la courbure présentée aux plaques de verre 1 est à l'entrée pratiquement nulle, pour s'accroître jusqu'à devenir maximale au niveau du dernier élément de cette partie A constitué de sa tige cintrée 5'' et de sa gaine, et une seconde partie B dans laquelle la courbure est constante et égale à la courbure établie par le dernier élément de conformation de la partie A.

Dans la première partie A, les tiges cintrées 5 sont montées pivotantes dans des longerons 42 disposés longitudinalement et dans la seconde partie B, elles sont montées dans des longerons 43. Les longerons 43 sont articulés sur l'extrémité aval des longerons 42 par une articulation 44, les longerons 43 de la partie B du lit de conformation reposent sur des articulations 45 et 46 montées sur les tiges 47 et 48 de vérins de levage 49 et 50 actionnés par les arbres 51 et 52. Les longerons 42 de la partie A du lit de conformation sont soutenus d'une part par l'articulation 44, et d'autre part à leur extrémité amont sur une articulation 53 située sur un axe horizontal transversal YY' et montée sur la tige 54 d'un vérin de levage 55 actionné par l'arbre 56. Ainsi on peut agir sur la position de toutes les tiges et même sur la position de la premièr des tiges 5 du lit de conformation grâce à des moyens simples à manoeuvrer, d'une grande précision.

Les vérins 49, 50 et 55 reposent, en même temps que les autres pièces de l'installation, en particulier le four de réchauffage 58 et le poste de trempe 59 sur un bâti général 57.

Le poste de trempe 59 comporte essentiellement des moyens de support des plaques de verre bombés, à savoir des tiges cintrées 5 entourées de leurs gaines tubulaires flexibles, ayant la même orientation que les tiges 5 de la partie B du lit de conformation, et des caissons de soufflage 60 et 61 débitant leur air de refroidissement au travers de buses tubulaires 62.

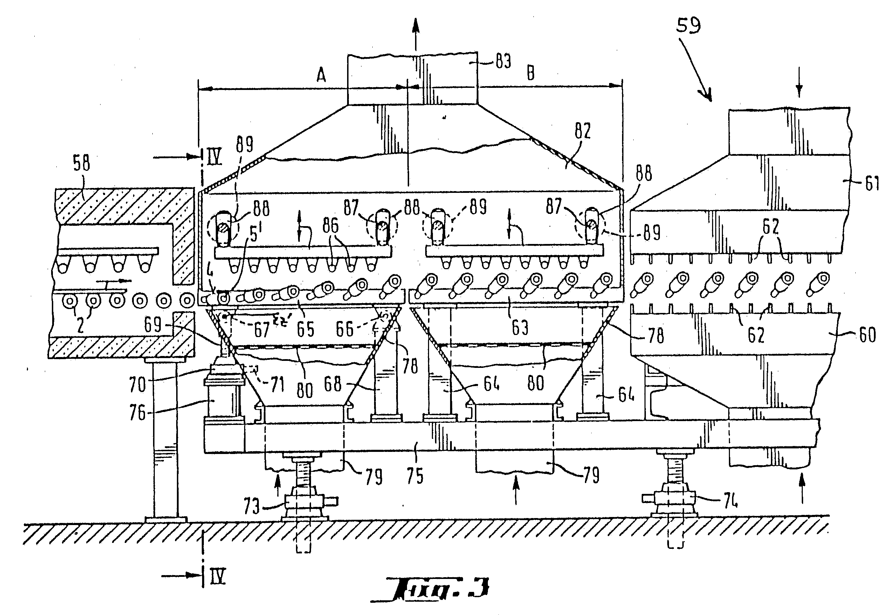

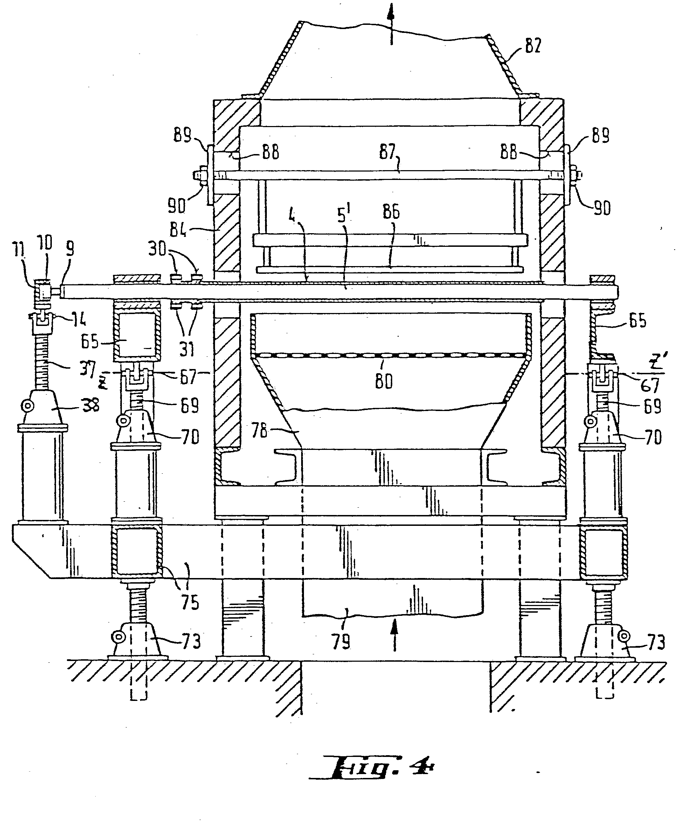

Une autre forme de réalisation intéressante d'un dispositif de bombage conforme à l'invention est illustrée sur les figures 3 et 4.

Dans cette réalisation les longerons qui supportent les tiges cintrées de la deuxième partie B du lit de conformation sont référencés 63 et ils forment un chassis qui repose sur des piliers 64. Les longerons qui supportent les tiges cintrées de la première partie A du lit de conformation sont référencés 65 et sont montés sur des articulations 66, 67. Les articulations 67 sont situées sur un axe horizontal transversal ZZ'.

Chaque articulation avant ou amont 67 est portée par une tige 69 d'un vérin de levage 70 actionné par un arbre 71, tandis que chaque articulation arrière ou aval 66 est portée par un pilier 68.

L'ensemble des piliers 64, 68 et du vérin 70 repose sur un cadre 75 lui-même porté par des vérins 73 et 74.

Le réglage en hauteur du lit de conformation dans son ensemble, réglage dans lequel on tient compte du rayon de courbure à donner aux plaques de verre, de la largeur desdites plaques en vue d'orienter, notamment horizontalement, ledit lit de conformation, s'effectue d'abord à l'aide des vérins de levage 73 et 74. Ils amènent le cadre 75 sur lequel reposent les piliers 64, 68 et le vérin 70 porteurs de lit de conformation, à la hauteur souhaitée.

Ensuite, un réglage plus précis par le vérin 70 permet de corriger la hauteur du début du lit de conformation.

Bien entendu, les manivelles emmanchées sur les tiges cintrées, les galets, les rails d'appui nécessaires pour l'orientation des tiges cintrées existent toujours dans cette réalisation, mais ils ne sont pas représentés pour ne pas encombrer le dessin.

Avantageusement, au-dessous des parties A et B du lit de conformation sont prévues des enceintes 78 en forme d'entonnoir, fermées à leur partie supérieure par des plaques 80 perforées, alimentées en gaz sous pression, généralement de l'air, chauffé à environ 650°C, par des conduites d'alimentation 79. L'air chaud émis verticalement du bas vers le haut, au travers des perforations des plaques 80, est dirigé vers la face inférieure des plaques de verre et forme ainsi un flux homogène et uniforme de gaz fournissant un soutien auxdites plaques de verre. Lorsque la surpression dans les enceintes 78 est d'environ 10 à 60 mm de colonne d'eau (10 à 60 mm C.E.) soit 100 à 600 Pa, que les perforations au travers des plaques 80 ont un diamètre de 12 à 15 mm et sont réparties régulièrement dans les deux directions transversale et longitudinale avec un même pas de 25 à 35 mm, que la distance entre les plaques perforées 80 et les plaques de verre est telle qu'au niveau du verre la pression statique est négligeable devant la pression dynamique, ce qui correspond à des distances entre les plaques 80 et les plaques de verre de l'ordre de 100 à 300 mm, on obtient sur les plaques de verre une pression homogène et uniforme de l'ordre de 2 à 30 mm C.E. qui permet de prendre en charge de l'ordre de 20 à 80% du poids des plaques de verre, ainsi de réduire la pression exercée par les éléments de conformation sur lesdites plaques et d'améliorer la qualité optique de façon notable.

Au-dessus du lit de conformation est montée une hotte 82 d'aspiration du gaz chaud. Cette hotte 82 communique avec un conduit d'évacuation 83 puis avec une gaine non figurée, qui recycle le gaz récupéré.

Ce gaz reçoit un appoint de chauffage et est réinjecté dans les enceintes 78 par les conduites d'alimentation 79.

Juste au-dessus du lit de conformation, plus bas que l'entrée de la hotte 82, sont prévus des éléments chauffants 86 attachés à un support 87 retenu par des pattes d'accrochage 88.

En amont du poste de bombage proprement dit, on retrouve le four de réchauffage 58 dans lequel les plaques de verre transportées à plat sur les rouleaux transporteurs cylindriques 2, sont chauffées à la température de bombage.

En aval du poste de bombage est disposé le poste de trempe 59 avec des caissons de soufflage 60 et 61 délivrant le gaz de trempe par des buses tubulaires 62.

Sur la figure 4 sont visibles d'autres détails concernant la construction et le montage du poste de bombage montré figure 3. Ainsi, on peut remarquer la manivelle 9 prévue à l'extrémité de la tige cintrée 5', première des tiges cintrées 5, pourvue du galet 10 qui est guidé dans le rail 11 en U. Comme visible sur cette figure 4, la partie médiane cintrée de cette tige 5', ses extrémités et la manivelle 9 se trouvent dans un même plan horizontal. On distingue également que, comme montré dans la vue en perspective de la figure 1, le rail 11 en U est monté pivotant sur l'articulation 14 fixée sur la tige 37 du vérin 38. Autour de la tige cintrée 5' tourne la gaine tubulaire 4, cette gaine 4 étant solidaire d'un pignon 31 qui engrène sur une chaine 30, ce pignon 31 étant disposé à l'extérieur de l'enceinte 84 qui renferme le poste de bombage. Le vérin 38 repose, comme le vérin 70 disposé sous l'extrémité amont de la partie A du lit de conformation, sur le chassis 75 qui pour sa part peut être réglé en hauteur par les vérins de levage 73.

On retrouve sur la figure 4 les éléments chauffants 86 déjà mentionnés en relation avec la figure 3. Ces éléments chauffants sont portés par le support 87, retenu par des pattes 88 elles-mêmes fixées à l'aide de rondelles 89 et d'écrous 90 dans les parois latérales de l'enceinte 84.

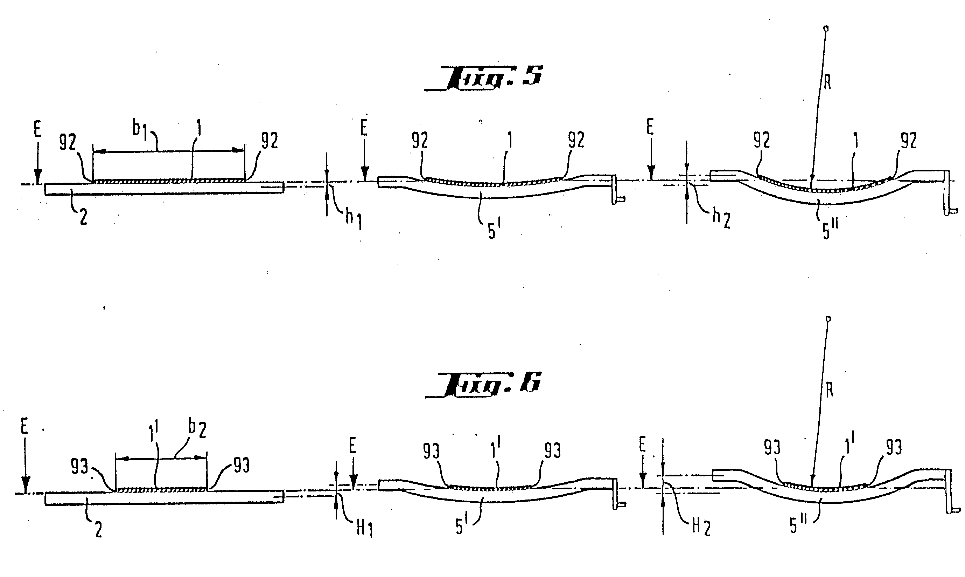

Les figures 5 et 6 illustrent l'effet des mesures que permet de mettre en oeuvre le dispositif de l'invention.

La figure 5 montre une plaque de verre 1 de largeur $b_1$ à bomber avec un rayon de courbure R.

La figure 6 montre une plaque de verre 1' de largeur $b_2$ inférieure à $b_1$ qui doit également être bombée avec un rayon de courbure R.

Dans le four de réchauffage, le plan de transport E est déterminé par les génératrices supérieures des rouleaux transporteurs cylindriques 2. En vue du passage dans le poste de bombage sur le premier élément de conformation comportant la tige cintrée 5' de la première partie A, légèrement inclinée dans un sens tel que le lit de bombage soit concave, les paliers de ladite tige 5' sont soulevés d'une hauteur $h_1$ afin que les bords longitudinaux 92 de la plaque de verre 1 qui se situent dans la portion cintrée de la tige cintrée 5', légèrement surbaissée par rapport à ses extrémités du fait de l'inclinaison et de la courbure de ladite tige, restent au niveau du plan de transport E. Au contraire, la zone centrale de la plaque de verre qui épouse la partie médiane cintrée de la tige 5', s'affaise en-dessous de niveau des bords 92.

Les paliers des tiges cintrées 5 suivantes sont soulevés de plus en plus, pour maintenir les bords 92 toujours au même niveau tandis que le centre s'affaise de plus en plus. Ainsi la tige 5'' dernière des tiges 5 de la portion A du lit de conformation voit ses paliers décalés vers le haut d'une hauteur $h_2$ au-dessus du plan de transport E, notablement supérieure à $h_1$.

Si maintenant comme le montre la figure 6, on cintre une plaque de verre 1' de largeur $b_2$ inférieure à $b_1$, les paliers de la tige cintrée 5' inclinée de façon à présenter sa concavité vers le haut, doivent être soulevés d'une distance $H_1$ supérieure à $h_1$ pour que les bords 93 de la plaque 1' restent au niveau du plan E de transport initial. D'une manière analogue, la distance $H_2$ du décalage vers le haut des paliers de la tige cintrée 5'' à l'extrémité aval de la partie A du lit de conformation, est nettement plus importante que $H_1$ et que $h_2$.

Les figures montrent en particulier que le réglage en hauteur conformément à l'invention, de l'axe de pivotement de la partie A du lit de conformation joue un rôle essentiel, déjà pour les premiers éléments de conformation.

Grâce au dispositif proposé, l'axe transversal de pivotement du chassis soutenant le lit de conformation peut être ajusté en hauteur, et ledit chassis peut être incliné en pivotant autour de cet axe transversal permettant d'augmenter ou de diminuer progressivement, suivant le sens de la courbure du lit de conformation, la hauteur des paliers des tiges cintrées.

## Revendications

1. Dispositif pour bomber sous l'effet de leur propre poids, des plaques de verre (1) défilant en position horizontale ou sensiblement horizontale, comportant un lit de conformation fait d'éléments de conformation tournants (3) qui, dans une partie amont (A) sont montés sur un chassis inclinable par pivotement autour d'un axe de pivotement transversal et horizontal (X, X') situé à son extrémité amont et qui dans cette même partie amont (A) présentent au contact des plaques de verre, au fur et à mesure qu'elles avancent, des génératrices dont l'enveloppe est de plus en plus courbée, caractérisé en ce que l'axe transversal de pivotement (X, X') du chassis portant les éléments de conformation (3) de la partie amont (A) est monté réglable en hauteur.

2. Dispositif selon la revendication 1, caractérisé en ce que le lit de conformation est formé de deux parties de lit (A et B), la première partie (A) ou partie amont étant formée par le chassis pivotant à longerons (8, 42 ou 65) et la seconde partie (B) ou partie aval étant formée par un chassis ou des longerons (22, 43, 63) constituant un chassis, réglables en hauteur en restant parallèles à eux-mêmes.

3. Dispositif selon la revendication 2, caractérisé en ce que les longerons (63) appartenant au chassis de la seconde partie (B) du lit de conformation ainsi que les longerons (65) de la première partie (A), y compris l'articulation (67) de pivotement de ces longerons (65), sont montés sur un cadre commun (75) qui peut être déplacé verticalement par l'intermédiaire de moyens de levage tels des vérins (73, 74).

4. Dispositif selon l'une des revendications 1 à 3, caractérisé en ce qu'en-dessous le lit de conformation est installée au moins une enceinte (78) contenant du gaz, en particulier de l'aire, chaud et sous pression, et le distribuant vers le haut en direction de la face inférieure des plaques de verre en un flux homogène et uniforme ayant une pression suffisante pour prendre en charge une partie du poids propre des plaques de verre (1).

5. Dispositif selon la revendication 4, caractérisé en ce que l'enceinte (78) est couverte à sa partie supérieure d'une plaque perforée (80) à perforations régulièrement distribuées, cette plaque étant disposée à une distance de 10 à 30 cm en-dessous des plaques de verre (1) se déplaçant sur les éléments de conformation.

6. Dispositif selon la revendication 5, caractérisé en ce que pour former le flux d'air destiné à aider au soutien des plaques de verre, la surpression dans l'enceinte (78) est de 10 à 60 mm de colonne d'eau et les perforations prévues dans la plaque perforée (80) ont un diamètre de 12 à 15 mm et sont réparties avec un même pas dans les deux directions, de 25 à 35 mm.

7. Dispositif selon l'une des revendications 4 à 6, caractérisé en ce qu'au-dessus du lit de conformation est montée une hotte (82) d'évacuation du gaz chaud, cette hotte récupérant ce gaz et le recyclant.

## Patentansprüche

1. Vorrichtung zum Biegen von sich in horizontaler oder im wesentlichen horizontaler Lage bewegenden Glasscheiben (1) unter der Wirkung ihres Eigengewichts, mit einem Formbett aus sich drehenden Formelementen (3), die in einem vorderen Abschnitt (A) in einem an seinem vorderen Ende um eine quer und horizontal ausgerichtete Schwenkachse (X, X') schwenkbaren Rahmen gelagert sind und deren mit den Glasscheiben in Berührung stehende Mantellinien in diesem vorderen Abschnitt (A) in Bewegungsrichtung der Glasscheiben zunehmend gekrümmt sind, dadurch gekennzeichnet, daß die quer ausgerichtete Schwenkachse (X, X') des die Verformungselemente (3) des vorderen Abschnitts (A) tragenden Rahmens höhenverstellbar gelagert ist.

2. Vorrichtung nach Anspruch 1, dadurch gekennzeichnet, daß das Formbett aus zwei Formbettabschnitten (A und B) besteht, von denen der erste oder vordere Abschnitt (A) von einem von Längsträgern gebildeten Schwenkrahmen (8, 42 oder 65), und der zweite oder hintere Abschnitt (B) von einem Rahmen oder von einen Rahmen darstellenden Längsträgern (22, 43, 63) gebildet wird, die parallel zu sich selbst höhenverstellbar sind.

3. Vorrichtung nach Anspruch 2, dadurch gekennzeichnet, daß die Längsträger (63) des Rahmens des zweiten Formbettabschnitts (B) sowie die Längsträger (65) des ersten Abschnitts (A) einschließlich des Drehlagers (67) dieser Längsträger (65) auf einem gemeinsamen Rahmen (75) angeordnet sind, der mit Hilfe von Höhenverstelleinrichtungen, wie Hubzylindern (73, 74), in vertikaler Richtung verstellbar ist.

4. Vorrichtung nach einem der Ansprüche 1 bis 3, dadurch gekennzeichnet, daß unterhalb des Formbettes wenigstens ein Gehäuse (78) angeordnet ist, daß heißes und unter Überdruck stehendes Gas, insbesondere Luft, enthält und dieses nach oben in Richtung auf die untere Seite der Glasscheiben verteilt, und zwar in einem homogenen und gleichmäßigen Strom und mit hinreichendem Druck, um einen Teil des Eigengewichts der Glasscheiben (1) zu tragen.

5. Vorrichtung nach Anspruch 4, dadurch gekennzeichnet, daß das Gehäuse (78) in seinem oberen Teil mit einer Lochplatte (80) mit regelmäßig verteilten Bohrungen abgedeckt ist, wobei diese Lochplatte in einem Abstand von 10 bis 30 cm unterhalb der über die Verformungselemente laufenden Glasscheiben (1) angeordnet.

6. Vorrichtung nach Anspruch 5, dadurch gekennzeichnet, daß zur Bildung des die Glasscheiben unterstützenden Luftstroms der Überdruck in dem Gehäuse (78) 10 bis 60 mm Wassersäule beträgt und die in der Lochplatte (80) angeordneten Bohrungen einen Durchmesser von 12 bis 15 mm aufweisen und in beiden Richtungen in dem gleichen Abstand von 25 bis 35 mm angeordnet sind.

7. Vorrichtung nach einem der Ansprüche 4 bis 6, dadurch gekennzeichnet, daß oberhalb des Formbettes eine Abzugshaube (82) für das heiße Gas angeornet ist, die das Glas auffängt und es im Kreislauf zurückführt.

**Claims**

1. A device for curving, under the effect of their weight, glass plates (1) passing in a horizontal or substantially horizontal position, comprising a shaping bed formed of rotatable shaping elements (3) which in an upstream part (A) are mounted on a chassis which is inclinable by pivoting about a transverse horizontal axis of pivoting (X, X') situated at its upstream end and which in this upstream part (A) have, in contact with the glass plates as they advance, generators of which the envelope is increasingly curved, characterised in that the transverse axis of pivoting (X, X') of the chassis carrying the shaping elements (3) of the upstream part (A) is mounted to be adjustable in height.

2. A device according to claim 1, characterised in that the shaping bed is formed of two bed parts (A and B), the first part (A) or upstream part being formed by the chassis pivoting by means of beams (8, 42 or 65) and the second part (B) or downstream part being formed by a chassis or beams (22, 43, 63) forming a chassis, adjustable in height and remaining parallel to themselves.

3. A device according to claim 2, characterised in that the beams (63) of the chassis of the second part (B) of the shaping bed and the beams (65) of the first part (A), including the articulation (67) for pivoting of these beams (65), are mounted on a common frame (75) which may be displaced vertically by lifting means such as jacks (73, 74).

4. A device according to any one of claims 1 to 3, characterised in that below the shaping bed there is provided at least one enclosure (78) containing a gas, such as air, which is hot and under pressure, distributing it upwardly towards the lower surface of the glass plates in a homogeneous, uniform flow at a pressure sufficient to support part of the weight of the glass plates (1).

5. A device according to claim 4, characterised in that the enclosure (78) is covered at its upper part by a perforated plate (80) having regularly distributed perforations, the plate being arranged at a distance from 10 to 30 cm below the glass plates (1) moving on the shaping elements.

6. A device according to claim 5, characterised in that to form the flow of air intended to assist support of the glass plates, the excess pressure in the enclosure (78) is from 10 to 60 mm of water gauge and the perforations in the perforated plate (80) have a diameter from 10 to 15 mm and are distributed with the same interval in two directions from 25 to 35 mm.

7. A device according to any one of claims 4 to 6, characterised in that above the shaping bed there is mounted a hood (82) for evacuation of hot gas, the hood recovering the gas for recycling.

Fig. 1

Fig. 2

Fig.3

*Fig. 4*

## *Fig. 5*

$E$   92   $b_1$   1   92   $E$   92   1   92   $E$   92   1   92   $R$

$h_1$   2   $5^I$   $h_2$   $5^{II}$

## *Fig. 6*

$E$   $1^I$   $b_2$   $E$   93   $1^I$   93   $E$   93   $1^I$   93   $R$

93   2   93   $H_1$   $5^I$   $H_2$   $5^{II}$